# FASCICULE DE BREVET EUROPEEN

(11) **EP 0 657 026 B1**
(45) Date de publication et mention de la délivrance du brevet: **16.12.1998**
(21) Numéro de dépôt: 94918923.7
(22) Date de dépôt: 14.06.1994
(51) Int. Cl.: G01N 21/71, G01N 21/63

(54) **PROCEDE D'ANALYSE ISOTOPIQUE PAR SPECTROMETRIE D'EMISSION OPTIQUE SUR PLASMA PRODUIT PAR LASER**
VERFAHREN ZUR ISOTOPENANALYSE MITTELS DER OPTISCHEN EMISSIONSSPEKTOMETRIE EINES DURCH LASERENERGIE ERZEUGTEN PLASMA
ISOTOPIC ANALYSIS METHOD USING OPTICAL EMISSION SPECTROMETRY ON LASER-GENERATED PLASMA

(30) Priorité: 15.06.1993 FR 9307179
(43) Date de publication de la demande: 14.06.1995
(73) Titulaire: COMMISSARIAT A L'ENERGIE ATOMIQUE, 75015 Paris (FR); COMPAGNIE GENERALE DES MATIERES NUCLEAIRES, F-78140 Velizy-Villacoublay Cédex (FR)
(72) Inventeur: MAUCHIEN, Patrick, F-91120 Palaiseau (FR); PIETSCH, Walter, F-92260 Fontenay-aux-Roses (FR); PETIT, Alain, F-75015 Paris (FR); BRIAND, Alain, F-75015 Paris (FR)
(74) Mandataire: Dubois-Chabert, Guy
(86) Numéro de dépôt international: FR9400708
(87) Numéro de publication internationale: WO9429699

(56) Documents cités:
- GB-A- 1 024 687
- US-A- 4 794 230
- PATENT ABSTRACTS OF JAPAN vol. 12, no. 224 (P-721) (3071) 25 Juin 1988 & JP,A,63 018 249 (KAWASAKI STEEL CORP) 26 Janvier 1988
- JOURNAL OF ALLOYS AND COMPOUNDS, vol.181, 1992 pages 57 - 62 G.M. MURRAY ET AL. 'determination of uranium isotopes in a complex matrix by optical spectroscopy'

## Description

### Domaine technique

La présente invention a pour objet un procédé d'analyse isotopique par spectrométrie d'émission optique sur plasma produit par laser.

Elle trouve une application dans la mesure des concentrations isotopiques d'éléments. L'un des domaines privilégiés de l'invention est l'industrie nucléaire.

### Etat de la technique

Les mesures de concentrations isotopiques des éléments sont généralement effectuées par spectrométrie de masse. L'échantillon à analyser est mis en solution puis atomisé et ionisé thermiquement. Les ions sont ensuite séparés suivant leur masse avant d'être comptés.

La spectrométrie de masse se caractérise par une très bonne sensibilité et une excellente précision des mesures. Par contre, outre le fait qu'elle nécessite une chimie préparative pour la mise en solution des échantillons, c'est une technique qui met en oeuvre des appareils sophistiqués et coûteux, qui ne peuvent être utilisés qu'en laboratoire.

Une autre technique pour mesurer les concentrations isotopiques consiste à analyser spectralement le rayonnement d'émission d'une source d'atomes excités. Dans ce cas, on sépare, à l'aide d'un spectromètre, les longueurs d'onde d'émission, celles-ci pouvant être très légèrement différentes pour plusieurs isotopes d'un même élément (effet de déplacement isotopique). La mesure des concentrations isotopiques est alors obtenue en mesurant le signal d'émission correspondant à chaque isotope.

La spectrométrie d'émission optique sur plasma induit par haute fréquence (ou SEO/PIHF en abrégé) met en oeuvre ce principe et a, par exemple, été utilisée pour l'analyse isotopique de l'uranium. Cette technique est rapide et relativement économique. Par contre, elle n'est pas très précise et, comme la spectrométrie de masse, elle ne peut pas être envisagée pour une utilisation hors laboratoire.

La spectrométrie de comptage alpha peut également être envisagée pour les éléments radioactifs. C'est une technique peu onéreuse, relativement simple à mettre en oeuvre. Elle peut, de plus, être utilisée pour l'analyse directe des échantillons solides. Son domaine d'application est cependant très restreint. Les particules alpha détectées sont celles qu'émettent les couches atomiques superficielles, les autres étant absorbées dans l'échantillon. Cela signifie que la mesure n'est représentative que de la surface de l'échantillon. L'analyse en masse nécessite donc une chimie préparative (dissolution de l'échantillon et préparation de dépôts de très faible épaisseur).

Un autre facteur limitatif est lié à la concentration en matière radioactive. Dans le cas de l'uranium, par exemple, si la concentration est trop élevée (quelques mg/cm²), on observe des interférences (recouvrement des pics correspondants U₂₃₄, U₂₃₅, U₂₃₈). Pour les faibles concentrations, les temps de comptage sont très longs (plusieurs minutes, voire plusieurs dizaines de minutes). Dans le meilleur des cas, le niveau de précision de la spectrométrie alpha pour l'analyse isotopique se situe au niveau de quelques pourcents.

La spectrométrie de comptage gamma présente des performances prometteuses pour l'analyse isotopique de l'uranium. Il s'agit d'une technique d'analyse non destructive qui offre, de plus, la possibilité d'une détermination directe de la masse d'uranium. Par contre, les temps de comptage (donc d'analyse) sont très longs. Elle ne s'adresse qu'aux éléments radioactifs et elle ne permet pas une cartographie précise de la composition isotopique des échantillons. Enfin, elle ne peut pas être envisagée comme technique d'analyse "in situ".

On connaît également un procédé d'analyse spectrale consistant à irradier un échantillon par un faisceau laser en impulsions pour produire un plasma, à analyser le spectre de la lumière émise par ce plasma et à déduire de ce spectre la composition élémentaire de l'échantillon.

Par analogie aux dénominations usuelles en la matière, on peut désigner ce procédé par Spectrométrie d'Emission Optique sur Plasma Produit par Laser ou SEO/PPL en abrégé.

Un tel procédé est décrit par exemple dans le document GB-A-1,024,687.

Ce procédé est utilisé par exemple pour le cuivre, l'acier inoxydable, le molybdène, le tungstène et le graphite. Il est commode pour déterminer la composition élémentaire de l'échantillon, mais il ne permet pas, a priori, d'effectuer une analyse isotopique, laquelle requiert une finesse d'analyse beaucoup plus grande. En effet, les déplacements isotopiques sont en général beaucoup plus faibles que les déplacements spectraux correspondants à des éléments différents. Si l'on applique, par exemple, la méthode SEO/PPL à l'uranium, qui offre pourtant un déplacement isotopique assez grand de l'ordre de 0,025 nm, en utilisant une densité de puissance de 1,4 GW/cm² pour une durée d'impulsion de 28 ns, ce qui représente une énergie de 30 milliJoules, on obtient une raie de largeur à mi-hauteur 0,07 nm, c'est-à-dire environ trois fois le déplacement isotopique.

Ce procédé semble donc inapproprié à l'analyse isotopique.

### Exposé de l'invention

La présente invention a justement pour but un procédé du type SEO/PPL mais dont les conditions expérimentales sont telles que l'analyse isotopique devient possible.

La première condition à remplir est que chaque impulsion du faisceau laser ait une énergie inférieure ou égale à 10 mJ/cm².

De préférence, une seconde condition doit être satisfaite : l'analyse spectrale doit s'effectuer avec un certain retard par rapport à l'impulsion laser. Ce retard est au moins égal à 200 ns.

De préférence encore, l'analyse de la lumière émise par le plasma doit porter sur un volume de plasma situé à une certaine distance de la surface de l'échantillon, égale au moins à 0,5 mm.

L'invention peut s'appliquer aux éléments qui présentent un déplacement isotopique important, notamment l'uranium et le plutonium, mais également aux Terres rares (Nd, Sm, Gd, Er,) ou encore au tungstène.

### Brève description des dessins

- la figure 1 est un schéma de principe d'un appareillage mettant en oeuvre le procédé de l'invention ;
- la figure 2 montre un spectre SEO/PPL obtenu sur de l'uranium enrichi.

### Exposé détaillé d'un mode de réalisation

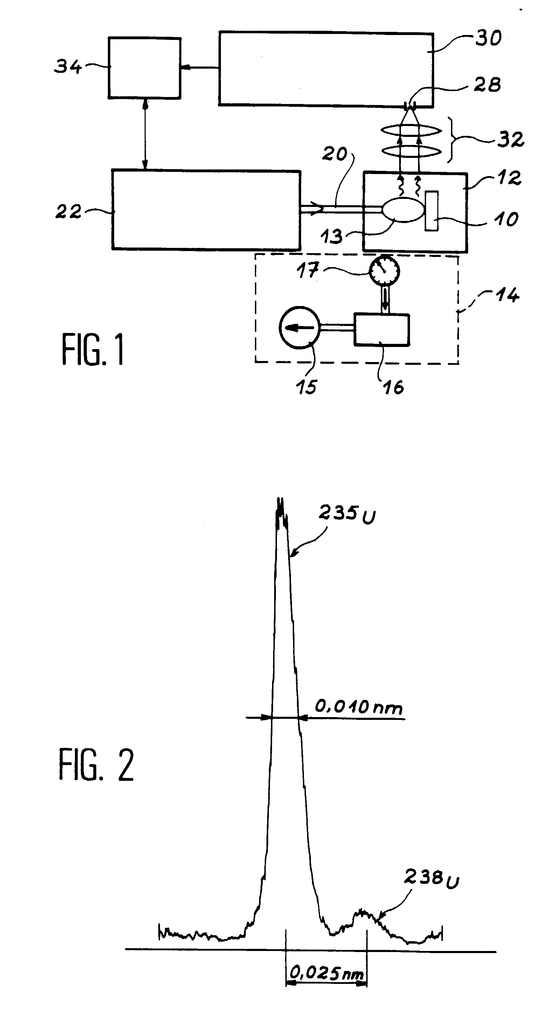

Le schéma de principe d'un appareillage mettant en oeuvre l'invention est donné figure 1. L'échantillon à analyser 10 est placé dans une enceinte 12 dans laquelle la pression est maintenue à quelques dizaines de mtorr à l'aide de moyens classiques 14 (pompe 15, filtre 16, appareil de mesure de pression 17, etc...). Un faisceau laser 20 est dirigé sur l'échantillon. Il est produit par une source laser 22. Ce laser peut être du type XeCl ou Nd:YAG ou de tout autre type. Il fonctionne de préférence en impulsion.

L'énergie déposée sur l'échantillon 10 par le faisceau laser 20 (quelques milliJoules/cm² par exemple 10 mJ/cm²) provoque l'arrachement de la matière et la formation d'un plasma lumineux 13. Une partie de la lumière émise par une fraction volumique précise du plasma 13, est collectée et focalisée sur la fente d'entrée 28 d'un spectromètre 30 à haute résolution spectrale, et cela par un système optique simple 32 utilisant l'association de plusieurs lentilles ou/et de une ou plusieurs fibres optiques non représentées. Le spectromètre 30 permet de séparer les différentes radiations issues du plasma. Le signal lumineux est recueilli sur un ou plusieurs photomultiplicateurs, ou sur un détecteur multicanal. Une chaîne d'amplification, de traitement du signal et de pilotage 34 est associée au spectromètre 30 et au laser 22.

Comme exposé plus haut, certaines conditions expérimentales doivent être respectées pour obtenir des largeurs de raies d'émission compatibles avec une analyse isotopique. Il est nécessaire de maîtriser un certain nombre de paramètres expérimentaux comme l'énergie laser d'irradiation des échantillons et les conditions spatio-temporelles de mesure. L'énergie laser ne doit pas dépasser quelques milliJoules par cm² et par impulsion (par exemple moins de 10mJ/cm²) ; au-delà, le plasma est trop dense et trop chaud et les raies d'émission s'élargissent considérablement. Le signal d'émission doit être collecté dans un volume situé à distance de la surface de l'échantillon, à au moins 0,5 mm de celle-ci. Le délai temporel entre l'impulsion laser et l'instant de la mesure doit être au moins égal à 200 ns.

La figure 2 montre un exemple de résultat obtenu avec un échantillon d'uranium métallique enrichi (93,5% U₂₃₅, 5,3% U₂₃₈ et 1,2% U₂₃₄). Le plasma a été produit par un laser XeCl focalisé sur une micro-région. Le spectre représente l'enregistrement du signal d'émission du plasma sur un domaine spectral de 0,085 nm autour de la transition atomique à 424,4372 nm de l'ion uranium. Le pic intense (largeur à mi-hauteur égale à 0,01 nm) est dû à l'émission de l'isotope U₂₃₅. On observe, à droite du pic de U₂₃₅, un second pic moins intense, correspondant à l'émission de U₂₃₈. Le déplacement spectral entre les deux pics est de 0,025 nm, ce qui correspond au déplacement isotopique connu pour cette raie.

En mesurant les intensités respectives des deux pics (ou leur surface), il est simple de déterminer les abondances relatives des deux isotopes. Sur l'exemple présenté, le rapport d'intensité U₂₃₅/U₂₃₈ est égal à 16,7 alors que le rapport vrai en concentration est de 17,64 (93,5%/5,3%). Ce rapport 16,7 conduit à une erreur de 5% sur la détermination de la concentration en U₂₃₈ (5,6% au lieu de 5,3%) et de 0,3% sur la détermination de U₂₃₅ (93,2% au lieu de 93,5%).

Ces résultats peuvent être considérablement améliorés, d'une part en multipliant les mesures, d'autre part, en effectuant les mesures simultanément sur les deux pics U₂₃₈ et U₂₃₅. Cela permet d'atteindre un niveau de précision meilleur que 1% pour U₂₃₈.

En utilisant des étalons d'uranium, il est également simple de déterminer des abondances absolues.

Ces résultats mettent clairement en évidence la faisabilité de l'invention pour l'analyse isotopique de U₂₃₅ et U₂₃₈. Par contre, on n'observe pas, sur le spectre, de pic correspondant à l'émission de U₂₃₄. Cela est dû à sa faible intensité (1,2% en concentration) et au fait qu'il n'est probablement pas bien séparé du pic U₂₃₅.

## Revendications

1. Procédé d'analyse d'un échantillon, consistant à :
- irradier l'échantillon (10) à analyser par un faisceau laser en impulsions (20) pour produire à sa surface un plasma (13),
- analyser le spectre (30) de la lumière émise par ce plasma (13),
- en déduire la composition de l'échantillon (10),
caractérisé par le fait que l'analyse est une analyse isotopique et par le fait que chaque impulsion du faisceau laser (20) a une énergie inférieure ou égale à 10 milliJoules par cm².

2. Procédé selon la revendication 1, caractérisé par le fait que l'analyse du spectre s'effectue avec un certain retard par rapport à l'impulsion laser.

3. Procédé selon la revendication 3, caractérisé par le fait que le retard est au moins égal à 200 ns.

4. Procédé selon la revendication 1, caractérisé par le fait que l'analyse de la lumière émise par le plasma porte sur un volume de plasma situé à une distance de la surface de échantillon égale au moins à 0,5 mm.

5. Procédé selon l'une quelconque des revendications 1 à 4, caractérisé par le fait que l'échantillon est en uranium ou en plutonium.

## Patentansprüche

1. Verfahren zur Analyse einer Probe, darin bestehend:
- die zu analysierende Probe (10) mit einem Pulslaserstrahl (20) zu bestrahlen, um an seiner Oberfläche ein Plasma (13) zu erzeugen,
- das Spektrum (30) des durch dieses Plasma (13) abgestrahlten Lichts zu analysieren,
- daraus die Zusammensetzung der Probe (10) abzuleiten,
**dadurch gekennzeichnet,**
daß die Analyse eine Isotopenanalyse ist, und dadurch, daß jeder Impuls des Laserstrahls (20) eine Energie kleiner oder gleich 10mJ/cm² hat.

2. Verfahren nach Anspruch 1, dadurch gekennzeichnet, daß die Analyse des Spektrums mit einer bestimmten Verzögerung in bezug auf den Laserstrahl erfolgt.

3. Verfahren nach Anspruch 2, dadurch gekennzeichnet, daß die Verzögerung wenigstens gleich 200ns beträgt.

4. Verfahren nach Anspruch 1, dadurch gekennzeichnet, daß die Analyse des durch das Plasma abgestrahlten Lichts ein Plasmavolumen betrifft, das zu der Oberfläche der Probe einen Abstand von wenigstens 0,5mm aufweist.

5. Verfahren nach einem der Ansprüche 1 bis 4, dadurch gekennzeichnet, daß die Probe aus Uran oder aus Plutonium ist.

## Claims

1. Process for the analysis of a sample consisting of :
- irradiating the sample (10) to be analyzed by a pulse-type laser beam (20) to produce a plasma (13) on its surface,
- analyzing the spectrum (30) of the light emitted by said plasma (13),
- deducing therefrom the composition of the sample (10),
characterized in that the analysis is an isotopic analysis and in that each pulse of the laser beam (20) has an energy equal to or below 10 milliJoules per cm².

2. Process according to claim 1, characterized in that the analysis of the spectrum takes place with a certain time lag relative to the laser pulse.

3. Process according to claim 2, characterized in that the time lag is at least equal to 200 ns.

4. Process according to claim 1, characterized in that the analysis of the light emitted by the plasma relates to a plasma volume at a distance from the sample surface of at least 0.5 mm.

5. Process according to any one of the claims 1 to 4, characterized in that the sample is of uranium or plutonium.
